# EUROPEAN PATENT APPLICATION

(11) **EP 4 215 448 A1**
(43) Date of publication of application: **26.07.2023**
(21) Application number: 21869198.8
(22) Date of filing: 02.09.2021
(51) Int. Cl.: B65D 1/00, C08G 63/00, C08G 63/80, C08G 63/84

(54) **POLYESTER RESIN, BLOW-MOLDED OBJECT THEREFROM, AND PRODUCTION METHODS THEREFOR**

(30) Priority: 17.09.2020 JP 2020156455
(71) Applicant: TOYOBO CO., LTD., Osaka-shi Osaka 5300001 (JP)
(72) Inventor: NAKAGAWA, Satoru, Tsuruga-shi, Fukui 914-8550 (JP); UOTANI, Kosuke, Tsuruga-shi, Fukui 914-8550 (JP); KANETAKA, Shinya, Osaka-shi, Osaka 530-0001 (JP)
(74) Representative: Müller-Boré & Partner Patentanwälte PartG mbB
(86) International application number: PCT/JP2021/032359
(87) International publication number: WO 2022/059511

(57) **Abstract**

The present invention provides a polyester resin and a hollow molded body containing reduced amounts of cyclic trimer and aluminum-based foreign matter, with maintained catalytic activity and a reduced catalyst cost. A polyester resin, comprising an aluminum compound and a phosphorus compound, and satisfying the following (1) to (3): (1) a content of aluminum element in the polyester resin is 9 to 19 ppm by mass, (2) a content of phosphorus element in the polyester resin is 22 to 40 ppm by mass, and (3) a mole ratio of phosphorus element to aluminum element in the polyester resin is 1.55 or more and 1.85 or less.

## Description

### TECHNICAL FIELD

The present invention relates to a polyester resin, a hollow molded body formed therefrom, and a production method therefor. A polyester resin and a hollow molded body formed from the polyester resin contain an aluminum compound-derived component and a phosphorus compound-derived component in certain amounts as a catalyst, the amounts of aluminum-based foreign matter and cyclic trimer in the polyester resin and the hollow molded body are reduced, and the qualities of the polyester resin such as heat stability are improved and catalyst cost is reduced.

### BACKGROUND ART

Polyester resins typified by polyethylene terephthalate (PET), polybutylene terephthalate (PBT), polyethylene naphthalate (PEN), etc., have excellent mechanical properties and chemical properties, and are widely used, for example, in various fields such as fibers for clothing and industrial materials; films and sheets for packaging, a magnetic tape and optics; a bottle, which is a hollow molded product; a casing for electric and electronic parts; and others such as an engineering plastic molded product, depending on characteristics of each polyester resin. In particular, since bottles consisting of saturated polyester resin, such as PET, have excellent mechanical strength, high heat resistance, excellent transparency, and high gas barrier properties, the bottles are widely used as containers for filling beverages such as juice, carbonated drinks, and soft drinks as well as containers for eye drops and cosmetics.

As for a polyester resin containing, as a main component, a unit derived from an aromatic dicarboxylic acid and an alkylene glycol, which is a typical polyester resin, for example, PET is produced by producing an oligomer mixture such as bis(2-hydroxyethyl)terephthalate by esterification reaction or transesterification reaction of terephthalic acid or dimethyl terephthalate with ethylene glycol and melt polymerization of the oligomer mixture with use of a catalyst at a high temperature and under vacuum.

Conventionally, an antimony compound or a germanium compound has been widely used as a polyester polymerization catalyst used in the polymerization of such a polyester resin. Antimony trioxide, which is an example of the antimony compound, is an inexpensive catalyst having excellent catalytic activity. However, when antimony trioxide is used as a main component, that is, when antimony trioxide is used in an amount sufficient to achieve a practical polymerization rate, metal antimony is deposited during polymerization, so that darkening and foreign matter occur on the polyester resin, which also causes surface defects of a film. Moreover, in the case where antimony trioxide is used as a raw material for a hollow molded product or the like, it is difficult to obtain a hollow molded product having excellent transparency. Due to such circumstances, a polyester resin that does not contain any antimony or contains no antimony as a catalyst main component is desired.

A germanium compound has already been put into practical use as a catalyst that has excellent catalytic activity other than an antimony compound and provides a polyester resin without causing above-described problems. However, the germanium compound has the problem of being expensive. In addition, since the germanium compound is easily distilled out of the reaction system during polymerization, the catalyst concentration in the reaction system changes and controlling of polymerization becomes difficult. Therefore, the use of the germanium compound as a main component of the catalyst is problematic.

Polymerization catalysts that replace antimony compound or germanium compound have also been studied, and titanium compounds typified by tetraalkoxy titanates have already been proposed. However, a polyester resin produced using the titanium compound has problems that the polyester resin is likely to be thermally deteriorated during melt molding and that the polyester resin becomes significantly colored.

Due to the above-described circumstances, a polymerization catalyst that contains a metal component other than antimony, germanium, and titanium as a main metal component of the catalyst and that has excellent catalytic activity and provides a polyester resin having excellent color tone and thermal stability and providing a molded product with excellent transparency, is desired.

For example, Patent Literatures 1 and 2 each disclose a catalyst containing an aluminum compound and a phosphorus compound as a novel polymerization catalyst, and the catalyst has attracted attention. The use of the polymerization catalyst enables the production of polyester resin with excellent color tone, high transparency, and high thermal stability. However, in the above methods, the addition amount of the catalyst is large and the cost of the phosphorus compound used is high, thereby causing a problem that the cost of the catalyst required for polymerization is increased.

In addition, to produce a polyester resin of high quality while high polymerization activity is maintained, addition amounts of the aluminum compound and the phosphorus compound as a catalyst needs to be increased, and a problem of increased catalyst cost is caused as a result.

### CITATION LIST

### PATENT LITERATURE

[PTL 1] International Publication No. WO2007/032325
[PTL 2] Japanese Laid-Open Patent Publication No. 2006-169432

### SUMMARY OF THE INVENTION

### PROBLEMS TO BE SOLVED BY THE INVENTION

The present invention has been made to solve such problems of the conventional art, it is an object of the present invention to reduce catalyst cost while polymerization activity is maintained and to provide a polyester resin and a hollow molded body with low amount of cyclic trimer and aluminum-based foreign matter, although a polymerization catalyst having a metal component other than antimony, germanium and titanium element as a main metal component and containing an aluminum compound and a phosphorus compound is used.

### SOLUTION TO THE PROBLEMS

As a result of earnest studies to solve the above problems, the present inventors have found that the object can be achieved by reducing the amount of aluminum element contained in a polyester resin and setting the mole ratio of phosphorus element to aluminum element to be in an appropriate range, and have arrived at the present invention.

In the case where a polymerization catalyst such as an antimony compound or a germanium compound is used in polyester polymerization, the polymerization activity is generally proportional to the amount of the catalyst. However, with a polymerization catalyst containing an aluminum compound and a phosphorus compound, a complex formation reaction of the aluminum compound and the phosphorus compound affects the polymerization activity, hence the relationship between the polymerization activity and the addition amount of the catalyst cannot be simplified.

Therefore, the present inventors have analyzed the dominant factors of catalytic activity for a polymerization catalyst containing an aluminum compound and a phosphorus compound. As a result, the present inventors have found that, by reducing the amount of aluminum element in a polyester resin and setting the mole ratio of phosphorus element to aluminum element to be in an appropriate range, the catalyst cost can be suppressed, the amounts of cyclic trimer and aluminum-based foreign matter in a polyester resin are suppressed, and excellent polymerization activity is achieved. As a result, the present inventors have completed the present invention.

Specifically, the present invention has the following features.
[1] A polyester resin, comprising an aluminum compound and a phosphorus compound, and satisfying the following (1) to (3):
   (1) a content of aluminum element in the polyester resin is 9 to 19 ppm by mass,
   (2) a content of phosphorus element in the polyester resin is 22 to 40 ppm by mass, and
   (3) a mole ratio of phosphorus element to aluminum element in the polyester resin is 1.55 or more and 1.85 or less.
[2] The polyester resin according to above [1], wherein a content of aluminum element corresponding to aluminum-based foreign matter in the polyester resin is 1650 ppm by mass or less.
[3] The polyester resin according to above [1] or [2], wherein the polyester resin has an intrinsic viscosity (IV) of 0.56 dl/g or more.
[4] The polyester resin according to any one of above [1] to [3], wherein the phosphorus compound has a phosphorus element and a phenolic structure in the same molecule thereof.
[5] The polyester resin according to any one of above [1] to [4], wherein an amount of a cyclic trimer is 5000 ppm or less.
[6] A method for producing the polyester resin according to any one of above [1] to [5], the method comprising:
   a first step of synthesizing a polyester which is a polycondensate, or an oligomer thereof, as an intermediate;
   a second step of performing melt polymerization of the intermediate; and
   a third step of performing solid phase polymerization of a polyester resulting from the melt polymerization, wherein
   after the first step and before the second step, a solution A1 obtained by dissolving an aluminum compound and a solution B1 obtained by dissolving a phosphorus compound are added to the intermediate, and
   addition amounts of the solution A1 and the solution B1 satisfy the following (4) to (6),
   (4) an addition amount of aluminum element with respect to the polyester resin to be produced is 9 to 19 ppm by mass,
   (5) an addition amount of phosphorus element with respect to the polyester resin to be produced is 25 to 50 ppm by mass, and
   (6) a mole ratio of the addition amount of phosphorus element in the (5) to the addition amount of aluminum element in the (4) is 2.00 or more and 2.40 or less.
[7] The method for producing the polyester resin according to above [6], wherein the melt polymerization is performed until the intrinsic viscosity (IV) reaches 0.56 to 0.65 dl/g, and the solid phase polymerization is subsequently performed until the intrinsic viscosity (IV) reaches 0.70 to 0.85 dl/g.
[8] The method for producing the polyester resin according to above [6] or [7], wherein the solution A1 is a glycol solution and has a maximum absorption wavelength of 562.0 to 572.0 nm.
[9] The method for producing the polyester resin according to above [8], wherein the solution B1 is a glycol solution and has a maximum absorption wavelength of 460.0 to 463.0 nm.
[10] The method for producing the polyester resin according to above [9], wherein, for the glycol solution B1, heat treatment of the phosphorus compound is performed in a glycol solution at 170 to 196°C for 125 to 240 minutes.
[11] The method for producing the polyester resin according to any one of above [6] to [10], wherein
   the solution A1 and the solution B1 are glycol solutions, and
   a mixed solution of the glycol solution A1 and the glycol solution B1 has a maximum absorption wavelength of 559.5 to 560.8 nm.
[12] A hollow molded body formed from a polyester resin, comprising an aluminum compound and a phosphorus compound, and satisfying the following (7) to (9),
   (7) a content of aluminum element in the hollow molded body is 9 to 19 ppm by mass,
   (8) a content of phosphorus element in the hollow molded body is 22 to 40 ppm by mass, and
   (9) a mole ratio of phosphorus element to aluminum element in the hollow molded body is 1.55 or more and 1.85 or less.
[13] The hollow molded body according to above [12], wherein a content of aluminum element corresponding to aluminum-based foreign matter in the hollow molded body is 1650 ppm by mass or less.
[14] The hollow molded body according to above [12] or [13], wherein the phosphorus compound has a phosphorus element and a phenolic structure in the same molecule thereof.
[15] The hollow molded body according to any one of above [12] to [14], wherein an amount of a cyclic trimer is 6000 ppm or less.
[16] A method for producing the hollow molded body according to any one of above [12] to [15], the method comprising molding the polyester resin according to any one of above [1] to [5] to produce the hollow molded body.

### ADVANTAGEOUS EFFECTS OF THE INVENTION

The polyester resin of the present invention is a polyester resin produced by using a polymerization catalyst having a metal component other than antimony, germanium and titanium as a main metal component and containing an aluminum compound and a phosphorus compound, the polyester resin has color tone and thermal stabilities, the polymerization activity is maintained, and generation of cyclic trimer and aluminum-based foreign matter is suppressed. In addition, a problem of high catalyst cost, which is a problem of a production method for producing a polyester resin using a polymerization catalyst containing an aluminum compound and a phosphorus compound, can also be solved.

A hollow molded body of the present invention is formed from a polyester resin produced by using a polymerization catalyst having a metal component other than antimony, germanium and titanium as a principal metal component and containing an aluminum compound and a phosphorus compound. The hollow molded body of the present invention has color tone and thermal stabilities, the polymerization activity is maintained, and generation of cyclic trimer and aluminum-based foreign matter is suppressed. In addition, a problem of high catalyst cost, which is a problem of a production method for producing a polyester resin using a polymerization catalyst containing an aluminum compound and a phosphorus compound, can also be solved.

### BRIEF DESCRIPTION OF THE DRAWINGS

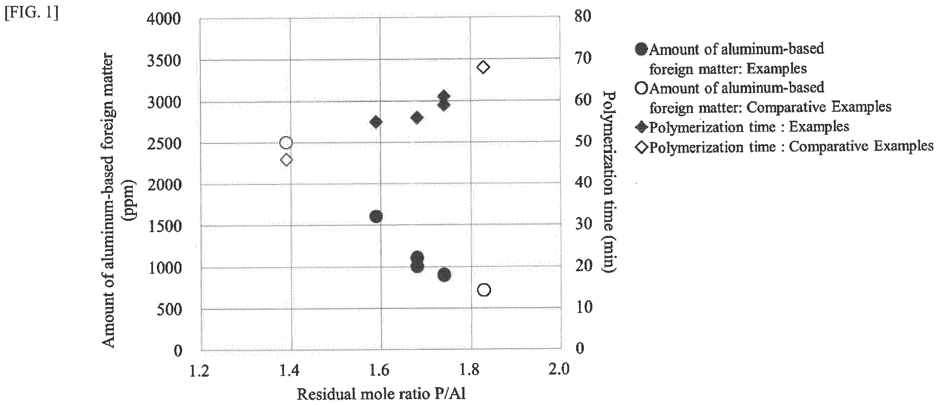

[FIG. 1] FIG. 1 is a diagram of the correlation between a residual mole ratio of phosphorus element to aluminum element, an amount of aluminum-based foreign matter, and a polymerization time obtained from the results of Examples and Comparative Examples.

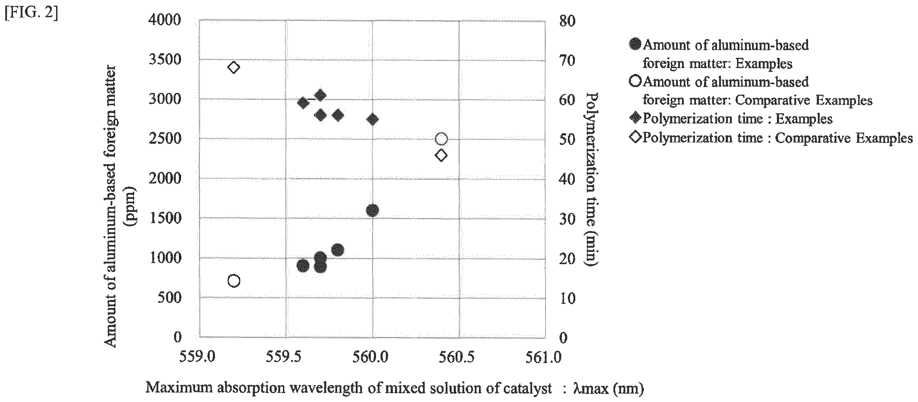

[FIG. 2] FIG. 2 is a diagram of the correlation between a maximum absorption wavelength of a mixed solution of a phosphorus-containing ethylene glycol solution and an aluminum-containing ethylene glycol solution, an amount of aluminum-based foreign matter, and a polymerization time obtained from the results of Examples and Comparative Examples.

### DESCRIPTION OF EMBODIMENTS

Hereinafter, the present invention will be described in detail.

The polyester resin of the present invention comprises an aluminum compound and a phosphorus compound. In addition, the polyester resin satisfies the following (1) to (3).
(1) a content of aluminum element in the polyester resin is 9 to 19 ppm by mass,
(2) a content of phosphorus element in the polyester resin is 22 to 40 ppm by mass, and
(3) a mole ratio of phosphorus element to aluminum element in the polyester resin is 1.55 or more and 1.85 or less.

Throughout the specification, ppm by mass means 10⁻⁴% by mass.

The polyester resin for the present invention contains a polyester resin formed from at least one compound selected from polyvalent carboxylic acids and ester-forming derivatives thereof and at least one compound selected from polyhydric alcohols and ester-forming derivatives thereof.

In the polyester resin of the present invention, a main polyvalent carboxylic acid component is preferably a dicarboxylic acid.

The polyester resin containing dicarboxylic acid as a main polyvalent carboxylic acid is preferably a polyester resin containing 70 mol% or more of dicarboxylic acid, more preferably a polyester resin containing 80 mol% or more of dicarboxylic acid, and further preferably a polyester resin containing 90 mol% or more of dicarboxylic acid with respect to the entire polyvalent carboxylic acid component. In the case where two or more dicarboxylic acids are used, the total amount of these dicarboxylic acids is preferably in the above range.

Examples of dicarboxylic acids include saturated aliphatic dicarboxylic acids such as oxalic acid, malonic acid, succinic acid, glutaric acid, adipic acid, pimelic acid, suberic acid, azelaic acid, sebacic acid, decane dicarboxylic acid, dodecane dicarboxylic acid, tetradecane dicarboxylic acid, hexadecane dicarboxylic acid, 1,3-cyclobutane dicarboxylic acid, 1,3-cyclopentane dicarboxylic acid, 1,2-cyclohexane dicarboxylic acid, 1,3-cyclohexane dicarboxylic acid, 1,4-cyclohexane dicarboxylic acid, 2,5-norbornane dicarboxylic acid, and dimer acid, or ester-forming derivatives thereof; unsaturated aliphatic dicarboxylic acids such as fumaric acid, maleic acid, and itaconic acid, or ester-forming derivatives thereof; and aromatic dicarboxylic acids such as orthophthalic acid, isophthalic acid, terephthalic acid, 5-(alkali metal)sulfoisophthalic acids, diphenic acid, 1,3-naphthalene dicarboxylic acid, 1,4-naphthalene dicarboxylic acid, 1,5-naphthalene dicarboxylic acid, 2,6-naphthalene dicarboxylic acid, 2,7-naphthalene dicarboxylic acid, 4,4'-biphenyldicarboxylic acid, 4,4'-biphenyl sulfone dicarboxylic acid, 4,4'-biphenyl ether dicarboxylic acid, 1,2-bis(phenoxy)ethane-p,p'-dicarboxylic acid, pamoic acid, and anthracene dicarboxylic acid, or ester-forming derivatives thereof.

More preferably, the main polyvalent carboxylic acid component is terephthalic acid or an ester-forming derivative thereof, or a naphthalene dicarboxylic acid or an ester-forming derivative thereof. Examples of the naphthalene dicarboxylic acid and the ester-forming derivative thereof include 1,3-naphthalene dicarboxylic acid, 1,4-naphthalene dicarboxylic acid, 1,5-naphthalene dicarboxylic acid, 2,6-naphthalene dicarboxylic acid, 2,7-naphthalene dicarboxylic acid, and ester-forming derivatives thereof.

The polyester resin in which the main polyvalent carboxylic acid component is terephthalic acid or an ester-forming derivative thereof, or a naphthalene dicarboxylic acid or an ester-forming derivative thereof is preferably a polyester resin in which the total amount of the terephthalic acid or the ester-forming derivative thereof and the naphthalene dicarboxylic acid or the ester-forming derivative thereof contained with respect to the entire polyvalent carboxylic acid component is 70 mol% or more, more preferably a polyester resin in which such a total amount is 80 mol% or more, and further preferably a polyester resin in which such a total amount is 90 mol% or more.

Terephthalic acid, 2,6-naphthalene dicarboxylic acid, or ester-forming derivatives thereof are particularly preferable. If necessary, other dicarboxylic acids may be used as components.

As a polyvalent carboxylic acid other than these dicarboxylic acids, a trivalent or higher polyvalent carboxylic acid or hydroxycarboxylic acid may also be used in a small amount, and a trivalent to tetravalent polyvalent carboxylic acid is preferable. Examples of polyvalent carboxylic acids include ethane tricarboxylic acid, propane tricarboxylic acid, butane tetracarboxylic acid, pyromellitic acid, trimellitic acid, trimesic acid, 3,4,3',4'-biphenyltetracarboxylic acid, and ester-forming derivatives thereof. The amount of the trivalent or higher polyvalent carboxylic acid with respect to the entire polyvalent carboxylic acid component is preferably 20 mol% or less, more preferably 10 mol% or less, and further preferably 5 mol% or less. In the case where two or more trivalent or higher polyvalent carboxylic acids are used, the total amount of these polyvalent carboxylic acids is preferably in the above range.

Examples of hydroxycarboxylic acids include lactic acid, citric acid, malic acid, tartaric acid, hydroxyacetic acid, 3-hydroxybutyric acid, p-hydroxybenzoic acid, p-(2-hydroxyethoxy)benzoic acid, 4-hydroxycyclohexane carboxylic acid, or ester-forming derivatives thereof. The amount of the hydroxycarboxylic acid with respect to the entire polyvalent carboxylic acid component is preferably 20 mol% or less, more preferably 10 mol% or less, and further preferably 5 mol% or less. In the case where two or more trivalent or higher polyvalent carboxylic acids are used, the total amount of these polyvalent carboxylic acids is preferably in the above range.

Examples of ester-forming derivatives of polyvalent carboxylic acids or hydroxycarboxylic acids include alkyl esters, acid chlorides, and acid anhydrides thereof.

In the polyester resin of the present invention, a main polyhydric alcohol component is preferably a glycol.

The polyester resin in which the main polyhydric alcohol component is a glycol is preferably a polyester resin in which the amount of the glycol contained with respect to the entire polyhydric alcohol component is 70 mol% or more, more preferably a polyester resin in which such an amount is 80 mol% or more, and further preferably a polyester resin in which such an amount is 90 mol% or more. In the case where two or more glycols are used, the total amount of these glycols is preferably in the above range.

Examples of glycols include: alkylene glycols such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentylglycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, and 1,12-dodecanediol; aliphatic glycols such as polyethylene glycol, polytrimethylene glycol, and polytetramethylene glycol; and aromatic glycols such as hydroquinone, 4,4'-dihydroxybisphenol, 1,4-bis(β-hydroxyethoxy)benzene, 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, and glycols obtained by adding ethylene oxide to these glycols.

Among these glycols, alkylene glycols are preferable, and ethylene glycol, 1,3-propylene glycol, 1,4-butylene glycol, and 1,4-cyclohexanedimethanol are more preferable. In addition, the alkylene glycols may contain a substituent or an alicyclic structure in the molecular chain thereof, and two or more of the alkylene glycols may be used at the same time.

As a polyhydric alcohol other than these glycols, a trivalent or higher polyhydric alcohol may also be used in a small amount, and a trivalent to tetravalent polyhydric alcohol is preferable. Examples of trivalent or higher polyhydric alcohols include trimethylolmethane, trimethylolethane, trimethylolpropane, pentaerythritol, glycerol, and hexanetriol.

The amount of the trivalent or higher polyhydric alcohol with respect to the entire polyhydric alcohol component is preferably 20 mol% or less, more preferably 10 mol% or less, and further preferably 5 mol% or less. In the case where two or more trivalent or higher polyhydric alcohols are used, the total amount of the polyhydric alcohols is preferably in the above range.

In addition, use of a cyclic ester is also permitted. Examples of cyclic esters include ε-caprolactone, β-propiolactone, β-methyl-β-propiolactone, δ-valerolactone, glycolide, and lactide. Moreover, examples of ester-forming derivatives of polyhydric alcohols include esters of lower aliphatic carboxylic acids such as acetates of polyhydric alcohols.

The amount of the cyclic ester with respect to the total amount of the entire polyvalent carboxylic acid component and the entire polyhydric alcohol component is preferably 20 mol% or less, more preferably 10 mol% or less, and further preferably 5 mol% or less. In the case where two or more cyclic esters are used, the total amount of these cyclic esters is preferably in the above range.

The polyester resin of the present invention is preferably a polymer composed of only one monomer selected from ethylene terephthalate, butylene terephthalate, propylene terephthalate, 1,4-cyclohexanedimethylene terephthalate, ethylene naphthalate, butylene naphthalate, and propylene naphthalate, or a copolymer composed of two or more of the above monomers, and the polyester resin of the present invention is more preferably polyethylene terephthalate or a copolymer composed of ethylene terephthalate and at least one of the above monomers other than ethylene terephthalate, and particularly preferably polyethylene terephthalate. The copolymer composed of ethylene terephthalate and at least one of the above monomers other than ethylene terephthalate contains a component derived from the ethylene terephthalate monomer preferably in an amount of 70 mol% or more, more preferably in an amount of 80 mol% or more, and further preferably in an amount of 90 mol% or more.

In the hollow molded body requiring transparency, the copolymer composed of ethylene terephthalate and at least one of the above monomers other than ethylene terephthalate may be a copolymer obtained by copolymerizing the copolymerization component that can reduce the crystallinity of polyester, such as isophthalic acid, neopentyl glycol, 1,4-cyclohexanedimethanol, polyethylene glycol, and the like.

### <Polymerization catalyst>

The polyester resin of the present invention contains an aluminum compound-derived component and a phosphorus compound-derived component in certain amounts as a catalyst. That is, polyester resin of the present invention is produced by using a polymerization catalyst containing an aluminum compound and a phosphorus compound.

### <Aluminum compound>

The aluminum compound contained in the polymerization catalyst is not limited as long as the aluminum compound is soluble in a solvent, and known aluminum compounds can be used without limitation. Examples of the aluminum compound include: carboxylates such as aluminum formate, aluminum acetate, basic aluminum acetate, aluminum propionate, aluminum oxalate, aluminum acrylate, aluminum laurate, aluminum stearate, aluminum benzoate, aluminum trichloroacetate, aluminum lactate, aluminum citrate, aluminum tartrate, and aluminum salicylate; inorganic acid salts such as aluminum chloride, aluminum hydroxide, aluminum hydroxychloride, aluminum nitrate, aluminum sulfate, aluminum carbonate, aluminum phosphate, and aluminum phosphonate; aluminum alkoxides such as aluminum methoxide, aluminum ethoxide, aluminum n-propoxide, aluminum isopropoxide, aluminum n-butoxide, and aluminum t-butoxide; chelate compounds such as aluminum acetylacetonate, aluminum ethylacetoacetate, and aluminum ethylacetoacetate di-iso-propoxide; and organic aluminum compounds such as trimethylaluminum and triethylaluminum and partially hydrolyzed products thereof, reaction products composed of aluminum alkoxides or aluminum chelate compounds and hydroxycarboxylic acids, composite oxides of aluminum, aluminum oxide, ultrafine particle aluminum oxide, or aluminum silicate and titanium, silicon, zirconium, alkali metals, alkaline earth metals, or the like; etc. Among these compounds, at least one compound selected from carboxylates, inorganic acid salts, and chelate compounds is preferable; among these compounds, at least one compound selected from aluminum acetate, basic aluminum acetate, aluminum chloride, aluminum hydroxide, aluminum hydroxychloride, and aluminum acetylacetonate is more preferable; at least one compound selected from aluminum acetate, basic aluminum acetate, aluminum chloride, aluminum hydroxide, aluminum hydroxychloride, and aluminum acetylacetonate is further preferable; and at least one compound selected from aluminum acetate and basic aluminum acetate is particularly preferable; and basic aluminum acetate is most preferable.

The above aluminum compound is preferably an aluminum compound that is soluble in a solvent such as water or a glycol. Solvents that can be used in the present invention are water and alkylene glycols. Examples of alkylene glycols include ethylene glycol, diethylene glycol, triethylene glycol, propylene glycol, dipropylene glycol, tripropylene glycol, trimethylene glycol, ditrimethylene glycol, tetramethylene glycol, ditetramethylene glycol, and neopentyl glycol. At least one glycol selected from ethylene glycol, trimethylene glycol, and tetramethylene glycol is preferable, and ethylene glycol is more preferable. A solution obtained by dissolving the aluminum compound in water or ethylene glycol is preferably used since the effects of the present invention can be significantly exhibited.

The content of aluminum element in the polyester resin of the present invention needs to be 9 to 19 ppm by mass, and is preferably 10 to 19 ppm by mass, more preferably 10 to 17 ppm by mass, and further preferably 12 to 17 ppm by mass. If the content of aluminum element is less than 9 ppm by mass, sufficient polymerization activity is not exhibited in some cases. On the other hand, if the content of aluminum element exceeds 19 ppm by mass, the amount of aluminum-based foreign matter may be increased, and catalyst cost may also be increased, so that such a content of aluminum element is not preferable.

### <Phosphorus compound>

The phosphorus compound contained in the polymerization catalyst is not particularly limited, but phosphonic acid-based compounds and phosphinic acid-based compounds are preferable since the compounds improve catalytic activity highly effectively, and among them, phosphonic acid-based compounds are more preferable since the compounds improve catalytic activity particularly effectively.

Among the above phosphorus compounds, a phosphorus compound having a phosphorus element and a phenolic structure in the same molecule is preferable. The phosphorus compound is not particularly limited as long as the phosphorus compound has a phosphorus element and a phenolic structure in the same molecule, but one or more compounds selected from the group consisting of phosphonic acid-based compounds having a phosphorus element and a phenolic structure in the same molecule and phosphinic acid-based compounds having a phosphorus element and a phenolic structure in the same molecule are preferably used since the compounds improve catalytic activity highly effectively, and one or more phosphonic acid-based compounds having a phosphorus element and a phenolic structure in the same molecule are more preferably used since the compounds improve catalytic activity very effectively.

Examples of phosphorus compounds having a phosphorus element and a phenolic structure in the same molecule include compounds represented by P(=O)R¹(OR²)(OR³) and P(=O)R¹R⁴(OR²). R¹ represents a hydrocarbon group having 1 to 50 carbon atoms and including a phenol moiety, or a hydrocarbon group having 1 to 50 carbon atoms and including a phenolic structure and a substituent such as a hydroxyl group, a halogen group, an alkoxyl group, or an amino group. R⁴ represents hydrogen, a hydrocarbon group having 1 to 50 carbon atoms, or a hydrocarbon group having 1 to 50 carbon atoms and including a substituent such as a hydroxyl group, a halogen group, an alkoxyl group, or an amino group. R² and R³ each independently represent hydrogen, a hydrocarbon group having 1 to 50 carbon atoms, or a hydrocarbon group having 1 to 50 carbon atoms and including a substituent such as a hydroxyl group or an alkoxyl group. It is noted that the hydrocarbon group may include a branched structure, an alicyclic structure such as cyclohexyl, or an aromatic ring structure such as phenyl or naphthyl. The terminals of R² and R⁴ may be bonded to each other.

Examples of phosphorus compounds having a phosphorus element and a phenolic structure in the same molecule include p-hydroxyphenylphosphonic acid, dimethyl p-hydroxyphenyl phosphonate, diethyl p-hydroxyphenyl phosphonate, diphenyl p-hydroxyphenyl phosphonate, bis(p-hydroxyphenyl)phosphinic acid, methyl bis(p-hydroxyphenyl) phosphinate, phenyl bis(p-hydroxyphenyl) phosphinate, p-hydroxyphenyl phosphinic acid, methyl p-hydroxyphenyl phosphinate, phenyl p-hydroxyphenyl phosphinate, and a dialkyl 3,5-di-tert-butyl-4-hydroxybenzyl phosphonate represented by the following (chemical formula 1). As a phosphorus compound having a phosphorus element and a phenolic structure in the same molecule, a phosphorus compound having a hindered phenolic structure is particularly preferable, and among them, the dialkyl 3,5-di-tert-butyl-4-hydroxybenzyl phosphonate shown in the following (chemical formula 1) is preferable.

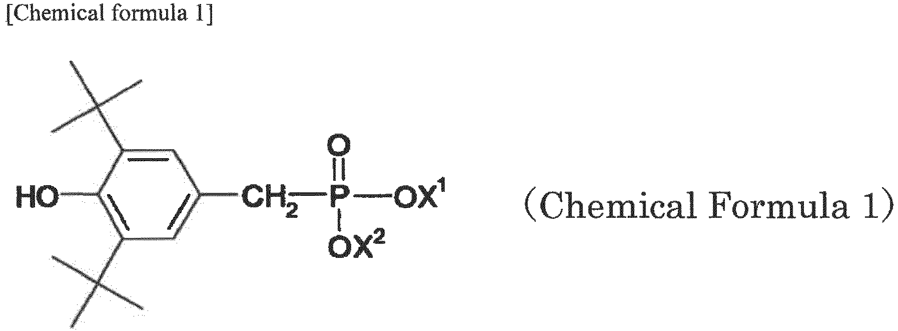

(In (chemical formula 1), X¹ and X² each represent hydrogen or an alkyl group having 1 to 4 carbon atoms.)

The number of carbon atoms of the alkyl group as X¹ and X² is preferably 1 to 4 and more preferably 1 to 2. In particular, an ethyl ester compound having two carbon atoms is preferable, since it is commercially available as Irganox 1222 (manufactured by BASF) and can easily be acquired.

The phosphorus compound in the present invention is preferably the dialkyl 3,5-di-tert-butyl-4-hydroxybenzyl phosphonate shown in the above (chemical formula 1), but in addition thereto, a modified product of the dialkyl 3,5-di-tert-butyl-4-hydroxybenzyl phosphonate may also be included. The modified product will be described in detail later.

The content of phosphorus element in the polyester resin of the present invention is 22 to 40 ppm by mass, preferably 23 to 35 ppm by mass, and more preferably 24 to 32 ppm by mass. If the content of phosphorus element is less than 22 ppm by mass, sufficient catalyst activity is not exhibited in some cases or the amounts of aluminum-based foreign matter and cyclic trimer may increase. On the other hand, if the content of phosphorus element exceeds 40 ppm by mass, the polymerization activity may decrease or the addition amount of the phosphorus compound becomes high, and the cost of the catalyst increases.

<Mole ratio of phosphorus element to aluminum element in polyester resin>

It is also important to control the mole ratio of phosphorus element to aluminum element in the polyester resin of the present invention (hereinafter, referred to as "residual mole ratio of phosphorus element to aluminum element" in order to distinguish from an "addition mole ratio of phosphorus element to aluminum element" described later), and the residual mole ratio of phosphorus element to aluminum element in the polyester resin needs to be 1.55 to 1.85, preferably 1.57 to 1.82, and more preferably 1.59 to 1.77. As described above, the aluminum element and the phosphorus element in the polyester resin of the present invention are derived from the aluminum compound and the phosphorus compound used as the polymerization catalyst for the polyester resin, respectively. When the aluminum compound and the phosphorus compound are used in combination at a specific ratio, a complex having catalytic activity can be functionally formed in the polymerization system, so that sufficient polymerization activity can be exhibited. If the residual mole ratio of phosphorus element to aluminum element is less than 1.55, thermal stability and thermal oxidation stability may decrease, the polyester resin may be significantly colored, or the amounts of aluminum-based foreign matter and cyclic trimer may increase. On the other hand, if the residual mole ratio of phosphorus element to aluminum element exceeds 1.85, the polymerization activity may be decreased, and the addition amount of the phosphorus compound becomes excessively large, so that the cost of the catalyst increases.

In the present invention, in addition to the aluminum compound and the phosphorus compound described above, other polycondensation catalysts such as an antimony compound, a germanium compound, and a titanium compound may also be used within the extent that the compounds do not cause problems of products, such as problems of characteristics, processability, and color tone of the polyester resin obtained by the production method of the present invention.

The content of antimony element in the polyester resin is preferably 30 ppm by mass or less, the content of germanium element in the polyester resin is preferably 10 ppm by mass or less, and the content of titanium element in the polyester resin is preferably 3 ppm by mass or less. However, for an object of the present invention, it is preferable that the other polycondensation catalysts are not used as much as possible.

In the polyester resin of the present invention, the content of aluminum element corresponding to aluminum-based foreign matter in the polyester resin is preferably 1650 ppm by mass or less, more preferably 1200 ppm by mass or less, further preferably 1100 ppm by mass or less, and further more preferably 1000 ppm by mass or less. The aluminum-based foreign matter is caused by the aluminum compound used as the polymerization catalyst, and is a foreign matter insoluble in the polyester resin of the present invention. In the case where the content of the aluminum-based foreign matter exceeds above range, the quality of fibers, films, and molded products may be decreased due to fine foreign matter insoluble in the polyester resin. In addition, the fine foreign matter may cause a problem of frequent clogging of filter during filtration of the polyester in a polycondensation process or a film forming process. The lower limit of the content of aluminum element corresponding to aluminum-based foreign matter is preferably 0 ppm by mass, however, the lower limit is around 200 ppm by mass due to technical difficulties.

In this specification, as can be seen from the fact that the amount of aluminum element is measured by the measurement method described later in Examples, this index relatively evaluates the amount of aluminum-based foreign matter, and does not indicate the absolute value of the amount of aluminum-based foreign matter contained in the polyester resin.

The intrinsic viscosity (IV) of the polyester resin of the present invention is preferably 0.56 dl/g or more, more preferably 0.65 to 0.80 dl/g, and further preferably 0.70 to 0.75 dl/g. If the intrinsic viscosity of the polyester resin is less than the above, mechanical strength and impact resistance of a molded product may be insufficient. On the other hand, if the intrinsic viscosity of the polyester resin exceeds the above range, economic efficiency is decreased, so that such an intrinsic viscosity is not preferable.

The amount of cyclic trimer (CT) in the polyester resin of the present invention is preferably 5000 ppm by mass or less, and more preferably 4500 ppm by mass. The lower limit is not particularly limited, however, the lower limit is preferably 2700 ppm by mass or more due to technical difficulties. If the amount of cyclic trimer exceeds 5000 ppm by mass, staining of a mold may increase during molding.

### [Method for producing polyester resin of present invention]

The method for producing the polyester resin of the present invention can be carried out as a method including known steps, except that a polyester polymerization catalyst containing an aluminum compound and a phosphorus compound is used as a catalyst and the polymerization catalyst is added so as to satisfy the following (4) to (6).

The method for producing the polyester resin of the present invention preferably has a first step of synthesizing a polyester which is a polycondensate (low-order condensate), or an oligomer thereof, as an intermediate, and a second step of further performing polycondensation of the intermediate. More preferably, the method has the first and second steps, and a third step of performing solid phase polymerization of the polyester resin obtained by melt polymerization.

Also, preferably, after the first step and before the second step, a solution A1 obtained by dissolving the aluminum compound and a solution B1 obtained by dissolving the phosphorus compound are added to the intermediate so as to satisfy the following (4) to (6). The polyvalent carboxylic acid and the ester-forming derivative thereof used for producing the polyester resin of the present invention, the hydroxycarboxylic acid and the ester-forming derivative thereof which may be added in a small amount, and the cyclic ester which may be added in a small amount are not distilled out of the reaction system during polymerization, and remain in the polyester resin produced by polymerization, in almost 100% of the use amounts initially added to the system as a catalyst. Therefore, the mass of the "polyester resin to be produced" can be calculated from the amounts of these ingredients.
(4) an addition amount of aluminum element with respect to the polyester resin to be produced is 9 to 19 ppm by mass,
(5) an addition amount of phosphorus element with respect to the polyester resin to be produced is 25 to 50 ppm by mass, and
(6) a mole ratio of the addition amount of phosphorus element in the (5) to the addition amount of aluminum element in the (4) (hereinafter, referred to as "addition mole ratio of phosphorus element to aluminum element") is 2.00 or more and 2.40 or less.

The method for producing the polyester which is the low-order condensate (low polymer) or the oligomer used in the present invention is not particularly limited.

The method for producing the polyester resin of the present invention can be carried out as a method including known steps, except that the polyester polymerization catalyst containing the aluminum compound and the phosphorus compound is used as a catalyst and the content of the aluminum element, the content of phosphorus element and the mole ratio of phosphorus element to aluminum element in the polyester resin of the present invention are adjusted to be in specific ranges. For example, in the case of producing polyethylene terephthalate, polyethylene terephthalate is produced by a direct esterification method in which terephthalic acid, ethylene glycol, and, if necessary, another copolymerization component are directly reacted, water is distilled off, esterification is performed, and then polycondensation is performed under normal or reduced pressure, or by a transesterification method in which dimethyl terephthalate, ethylene glycol, and, if necessary, another copolymerization component are reacted, methyl alcohol is distilled off, and transesterification is performed, and then polycondensation is performed under normal or reduced pressure. The melt polymerization may be a batch type polymerization method or a continuous polymerization method. The solid phase polymerization may not be performed, but preferably may be performed. In the case where the solid phase polymerization is performed, for promotion of crystallization before solid phase polymerization, polyester obtained by melt polymerization may be allowed to absorb moisture and then crystallized by heating, or may be crystallized by heating with spraying of water vapor directly onto polyester chips. The amount (mass) of the polyester resin to be produced can be calculated from the amounts (mass) of polyvalent carboxylic acids including dicarboxylic acid and the like used as raw materials.

In each of these methods, the esterification reaction or the transesterification reaction may be carried out in one stage or may be carried out in multiple stages. In a melt polymerization reaction, the number and size of reactors, the production conditions of each step, etc., are not limited and can be selected as necessary without limitation, and the melt polymerization reaction may be carried out in one stage or may be carried out in multiple stages, and is carried out preferably in two to five stages, more preferably in three to four stages, and further preferably in three stages. The melt polymerization reaction is preferably carried out by a continuous reactor. In the continuous reactor, a reaction vessel for the esterification reaction or the transesterification reaction and a melt polymerization reaction vessel are connected to each other by a pipe, and a method, in which the raw materials are continuously fed into each reaction vessel such that each reaction vessel does not become empty and transfer to the melt polymerization reaction vessel through the pipe and resin removal from the melt polymerization reaction vessel are performed, is employed. In this case, as for the term "continuously", the feeding of the raw materials and the removal need not be carried out completely at all times, but may be carried out intermittently in small quantities, for example, in quantities of about 1/10 of the reaction vessel volume. In the case where the polyester resin of the present invention is produced by the esterification reaction or the transesterification reaction and the continuous polymerization method in multiple stages, the solution A1 obtained by dissolving the aluminum compound and the solution B1 obtained by dissolving the phosphorus compound are preferably added to a transfer line between the reaction tank in the final stage out of the multiple stages (final esterification reaction tank or final esterification reaction tank) and an initial polymerization reaction tank.

In the case of a continuous polycondensation apparatus including three or more reactors (three-stage polymerization method including an initial stage, an intermediate stage, and a late stage), the first stage is defined as the initial stage, the final stage is defined as the late stage, the second stage to the stage before the final stage are defined as the intermediate stage, and the reaction conditions of the polymerization reaction in the intermediate stage are preferably conditions between the reaction conditions for the initial stage and the reaction conditions for the final stage. Preferably, the degree of increase in the intrinsic viscosity to be reached in each of these polymerization reaction steps is smoothly distributed.

### <Solid phase polymerization method>

In order to increase intrinsic viscosity, polyester resin produced by melt polymerization method may be subjected to solid phase polymerization. The solid phase polymerization may be a batch type polymerization method or a continuous polymerization method, but the solid phase polymerization is preferably carried out with a continuous device similarly as melt polymerization.

In the present invention, as a method to decrease the amount of CT, the polyester resin produced by melt polymerization method is additionally polymerized preferably by solid phase polymerization method. The solid phase polymerization is carried out by making polyester obtained in the second step (melt polymerization) into powder granular form. The granular powder means polyester in the forms of a chip, a pellet, a flake, or powder, and the polyester in the form of a chip or a pellet is preferable.

The solid phase polymerization is carried out by heating polyester in powder granular form at a temperature equal to or lower than the melting point of polyester, under circulation of an inert gas or under a reduced pressure. The solid phase polymerization may be carried out in one stage or may be carried out in multiple stages.

The powdered and granulated polyester supplied to the solid phase polymerization process may be pre-crystallized in advance by heating at a temperature lower than the temperature at which solid phase polymerization is carried out, and then the polyester may be supplied to the solid phase polymerization process.

Such a pre-crystallization process may be carried out by heating the powdered and granulated polyester in a dry state normally at 120 to 200°C, preferably carried out by heating at a temperature of 130 to 180°C for 1 minute to 4 hours, or may be carried out by heating the powdered and granulated polyester normally at a temperature of 120 to 200°C for 1 minute or longer under a water vapor atmosphere, under an atmosphere of inert gas containing water vapor, or under an atmosphere of air containing water vapor.

The polyester produced by melt polymerization as described above is, for example, made into a form of a chip, and then supplied to a storage silo or a solid phase polymerization process through a transport piping. In case where the transporting of chips is carried out, for example, forcibly by a low-density transportation method using air, large impact force is applied on the surface of polyester chip produced by melt polymerization due to collision with piping, and a large amount of fine particles and film-form materials are generated as a result. Such fine particles and film-form materials have the effect of promoting crystallization of polyester, and a large amount of the fine particles and the film-form materials significantly deteriorates transparency of an obtained molded product. Accordingly, in one preferred embodiment, a process to remove such fine particles and the film-form materials may be added.

The method to remove the fine particles and the film-form materials is not limited, however, the fine particles and the film-form materials are removed by a method, for example, of treating in a vibration sealing step, an air stream classification step by air stream, or a gravitation classification, which are separately provided in an intermediate step between the solid phase polymerization step and a step provided after the solid phase polymerization step.

### <Characteristics of intermediate>

In the present invention, the acid terminal group concentration of the intermediate (low-order condensate) produced by the first step is preferably 400 to 1500 eq/ton, and more preferably 500 to 1200 eq/ton. Setting the acid terminal group concentration of the oligomer to the above range can sufficiently bring out the activity of the polymerization catalyst.

Moreover, in the present invention, the ratio (OH%) of the hydroxyl group terminal to the total terminal group concentration of the intermediate is preferably 45 to 70 mol%, and more preferably 55 to 65 mol%. If the ratio of the hydroxyl group terminal of the oligomer is less than 45 mol%, the polycondensation activity may become unstable and the amount of aluminum-based foreign matter may increase. On the other hand, if the ratio of the hydroxyl group terminal of the oligomer exceeds 70 mol%, the polycondensation activity may decrease.

In the production method for the polyester resin of the present invention, preferably, the melt polymerization is performed until the intrinsic viscosity reaches 0.56 to 0.65 dl/g, and the solid phase polymerization is subsequently performed until the intrinsic viscosity reaches 0.70 to 0.85 dl/g. More preferably, the melt polymerization is performed until the intrinsic viscosity reaches 0.58 to 0.62 dl/g, and the solid phase polymerization is subsequently performed until the intrinsic viscosity reaches 0.70 to 0.75 dl/g.

If the intrinsic viscosity of the polyester resin after melt polymerization is less than 0.56 dl/g, a large amount of fine particles may be generated due to friction between polyester resin pellets or between polyester resin pellets and an air supply pipeline during transport of the polyester resin by air. In contrast, if the intrinsic viscosity after melt polymerization exceeds 0.65 dl/g, economic efficiency may decrease. If the intrinsic viscosity after solid phase polymerization is less than 0.70 dl/g, the amount of CT may not sufficiently decrease, and the formability of a hollow molded body may decrease. If the intrinsic viscosity after solid phase polymerization exceeds 0.85 dl/g, injection molding into a bottomed preform may be difficult.

In the case where the aluminum compound and the phosphorus compound used as catalysts are added preferably in the form of a slurry or a solution, a solution obtained by dissolving the compounds in a solvent such as water or a glycol is more preferably used, a solution obtained by dissolving the compounds in water and/or a glycol is further preferably used, and a solution obtained by dissolving the compounds in ethylene glycol is most preferably used.

In the present invention, it is preferable that after the esterification reaction or the transesterification reaction is completed, the solution A1 obtained by dissolving the aluminum compound and the solution B 1 obtained by dissolving the phosphorus compound are added such that the contents (residual amounts) of aluminum element and phosphorus element in the polyester resin are in ranges satisfying the above (1) to (3).

When the solution A1 obtained by dissolving the aluminum compound and the solution B 1 obtained by dissolving the phosphorus compound are added such that the contents (residual amounts) of aluminum element and phosphorus element in the polyester resin satisfy the above (1) to (3), a complex having catalytic activity can be functionally formed in the polymerization system, so that sufficient polymerization activity can be exhibited. In addition, generation of aluminum-based foreign matter can also be suppressed.

The aluminum element in the aluminum compound which serves as a catalyst remains in almost 100% of the use amount initially added to the system as a catalyst, in the polyester resin produced through polymerization, even when being put in a reduced pressure environment during the polymerization of the polyester resin. That is, the amount of the aluminum compound is almost unchanged before and after polycondensation, so that when the addition amount of aluminum element to the intermediate is set to be 9 to 19 ppm by mass, the content of aluminum element in the polyester resin is also 9 to 19 ppm by mass.

Moreover, the phosphorus compound which serves as a catalyst together with the aluminum compound is removed, from the system, in a part (about 10 to 40%) of the use amount initially added to the system as a catalyst, when being put in a reduced pressure environment during the polymerization of the polyester resin, but this removal ratio changes depending on the addition mole ratio of phosphorus element to aluminum element, the basicity or acidity of the aluminum-containing glycol solution and the phosphorus-containing glycol solution, an addition method for the aluminum-containing solution and the phosphorus-containing solution (whether the solutions are added in the form of one liquid, whether the solutions are added separately), etc. Therefore, it is preferable to appropriately set the addition amount of the phosphorus compound such that the content of phosphorus element in the polyester resin which is a final product satisfies the above (2).

In the present invention, the solution A1 obtained by dissolving the aluminum compound and the solution B1 obtained by dissolving the phosphorus compound are preferably added at the same time, and in a more preferred embodiment, the solution A1 obtained by dissolving the aluminum compound and the solution B1 obtained by dissolving the phosphorus compound are mixed at a certain addition ratio to the intermediate in advance, and thus prepared mixed solution as one liquid is added to the intermediate. By adding the solution in such a manner, the effect of the present invention can be more stably achieved. Examples of the method for making the solutions into one liquid in advance include a method in which the respective solutions are mixed in a tank, and a method in which the respective solutions are joined and mixed in the middle of a pipe for adding the catalyst.

In the case of addition to a reaction vessel, it is preferable to increase stirring of the reaction vessel. In the case of addition to a pipe between reaction vessels, it is preferable to install an in-line mixer or the like to quickly and uniformly mix the added catalyst solutions.

When the solution A1 obtained by dissolving the aluminum compound and the solution B1 obtained by dissolving the phosphorus compound are added separately, a large amount of foreign matter due to the aluminum compound is likely to be generated, so that the crystallization temperature during heating decreases, the crystallization temperature during cooling increases, or sufficient catalytic activity is not achieved, in some cases. By adding the aluminum compound and the phosphorus compound at the same time, a complex of the aluminum compound and the phosphorus compound which provides polymerization activity can be quickly and efficiently formed. However, when the aluminum compound and the phosphorus compound are added separately, the formation of the complex of the aluminum compound and the phosphorus compound is insufficient, and the aluminum compound that has not formed a complex with the phosphorus compound may be deposited as foreign matter.

Moreover, it is preferable to add the solution A1 obtained by dissolving the aluminum compound and the solution B 1 obtained by dissolving the phosphorus compound after the esterification reaction or the transesterification reaction is completed, and it is more preferable to add the solution A1 obtained by dissolving the aluminum compound and the solution B 1 obtained by dissolving the phosphorus compound to the intermediate after the first step and before the second step. If these solutions are added before the esterification reaction or the transesterification reaction is completed, the amount of aluminum-based foreign matter may increase.

When the polyester resin of the present invention is composed of at least one compound selected from polyvalent carboxylic acids and ester-forming derivatives thereof and at least one compound selected from polyhydric alcohols and ester-forming derivatives thereof, the solution A1 obtained by dissolving the aluminum compound is preferably a glycol solution obtained by dissolving the aluminum compound (hereinafter, referred to as aluminum-containing glycol solution A1), and the solution B1 obtained by dissolving the phosphorus compound is preferably a glycol solution obtained by dissolving the phosphorus compound (hereinafter, referred to as phosphorus-containing glycol solution Bl).

Hereinafter, the maximum absorption wavelengths of the aluminum-containing glycol solution A1 and the phosphorus-containing glycol solution B 1 will be described. When the maximum absorption wavelengths of the aluminum-containing glycol solution A1 and the phosphorus-containing glycol solution B1 are controlled to be in a specific range, the polymerization activity can be stabilized, and a polyester resin having stable quality can be obtained. When the maximum absorption wavelengths of the aluminum-containing glycol solution A1 and the phosphorus-containing glycol solution B1 are controlled to be in a specific range, the Lewis acid/base properties of the aluminum-containing glycol solution A1 and the phosphorus-containing glycol solution B 1 can be controlled to be in a specific range, and it is inferred that the Lewis acid/base properties affect a complex formation reaction of the aluminum compound and the phosphorus compound, and the complex formation reaction affects the polymerization activity.

### <Maximum absorption wavelength of aluminum-containing glycol solution A1>

The maximum absorption wavelength of the aluminum-containing glycol solution A1 is preferably 562.0 to 572.0 nm and more preferably 569.0 to 572.0 nm. The maximum absorption wavelength of the aluminum-containing glycol solution A1 is a value obtained by adding Mordant Blue 13, which is an acid dye, to the aluminum-containing glycol solution A1 and then measuring the absorption spectrum of a sample solution using an ultraviolet-visible spectrophotometer, and the measurement method therefor will be described in detail later.

In order for the aluminum compound to functionally form a complex having catalytic activity together with the phosphorus compound to exhibit polymerization activity, it is preferable to set the basicity of the aluminum compound contained in the aluminum-containing glycol solution A1 to be in a specific range.

The maximum absorption wavelength of the aluminum-containing glycol solution A1 is affected by the type and the addition amount of the aluminum compound to be used, or the type of the glycol, the temperature, the pressure, and the time for preparing the glycol solution, etc. For example, in a preferred embodiment, an aluminum compound having an aluminum content in a specific range is used, or an aqueous solution is treated under reduced pressure or under vacuum when being made into a glycol solution in the preparation of the aluminum-containing glycol solution A1.

If the maximum absorption wavelength of the aluminum-containing glycol solution A1 is less than the above range, the basicity of the aluminum compound in the solution is low and a complex with the phosphorus compound is not sufficiently formed, therefore, a decrease in polymerization activity and an increase in the amount of aluminum-based foreign matter may be caused. On the other hand, it is technically difficult for the maximum absorption wavelength to exceed the above range.

### <Maximum absorption wavelength of phosphorus-containing glycol solution B1>

The maximum absorption wavelength of the phosphorus-containing glycol solution B1 is preferably 458.0 to 465.0 nm, more preferably 460.0 to 463.0 nm, and further preferably 461.0 to 462.0 nm. The maximum absorption wavelength of the phosphorus-containing glycol solution B1 is a value obtained by adding an aqueous solution of Bismarck Brown, which is a basic dye, to the phosphorus-containing glycol solution B1 and then measuring the absorption spectrum of a sample solution using an ultraviolet-visible spectrophotometer, and the measurement method therefor will be described in detail later.

In order for the phosphorus compound to functionally form a complex having catalytic activity together with the aluminum compound to exhibit polymerization activity, it is preferable to set the acidity of the phosphorus compound contained in the phosphorus-containing glycol solution B1 to be in a specific range.

The maximum absorption wavelength of the phosphorus-containing glycol solution B1 is affected by the type and the addition amount of the phosphorus compound to be used, or the type of the glycol, the temperature, the pressure, and the time when preparing the glycol solution, etc. If the maximum absorption wavelength of the phosphorus-containing glycol solution B1 exceeds the above range, the acidity of the phosphorus compound is low, and a complex with the aluminum compound is not sufficiently formed, so that an increase in the aluminum-based foreign matter is caused due to the phosphorus compound being distilled out of the polymerization system. Therefore, such a maximum absorption wavelength is not preferable. On the other hand, if the maximum absorption wavelength is less than the above range, the acidity of the phosphorus compound is high, and the binding with the aluminum compound becomes strong, so that the polymerization activity may significantly decrease.

### <Heat treatment of phosphorus compound>

Moreover, the phosphorus compound used in the present invention is preferably a phosphorus compound on which heat treatment is performed in a solvent. The solvent is not limited as long as the solvent is at least one solvent selected from water and alkylene glycols, but as the alkylene glycol, the solvent which dissolves the phosphorus compound is preferably used, and the glycol that is a component of the polyester resin of the present invention, such as ethylene glycol, is more preferably used. The heat treatment in the solvent is preferably performed after the phosphorus compound is dissolved, but the phosphorus compound does not have to be completely dissolved.

As for the conditions for the above heat treatment, the heat treatment temperature is preferably 170 to 196°C, more preferably 175 to 185°C, and further preferably 175 to 180°C. The heat treatment time is preferably 125 to 240 minutes, and more preferably 140 to 210 minutes.

The concentration of the phosphorus compound during the heat treatment is preferably 3 to 10% by mass.

By the above heat treatment, the acidity of the phosphorus compound contained in the glycol solution can be made constant, the polymerization activity due to the use in combination with the aluminum compound is improved, and the amount of aluminum-based foreign matter generated due to the polymerization catalyst can be decreased.

In the case where the dialkyl 3,5-di-tert-butyl-4-hydroxybenzyl phosphonate which is the phosphorus compound shown in the above (chemical formula 1) is used as the phosphorus compound, the structure of a part of the dialkyl 3,5-di-tert-butyl-4-hydroxybenzyl phosphonate which is the phosphorus compound shown in (chemical formula 1) changes in the above heat treatment. For example, the structure of the part of the dialkyl 3,5-di-tert-butyl-4-hydroxybenzyl phosphonate changes to structures caused by desorption of a t-butyl group, hydrolysis of an ethyl ester group, and hydroxyethyl ester exchange (transesterification with ethylene glycol). Therefore, in the present invention, as the phosphorus compound, phosphorus compounds obtained through structure change are also included in addition to the dialkyl 3,5-di-tert-butyl-4-hydroxybenzyl phosphonate shown in (chemical formula 1). It is noted that desorption of a t-butyl group occurs prominently at high temperatures in the polymerization process.

In the following, nine phosphorus compounds obtained by changing the structure of a part of diethyl 3,5-di-tert-butyl-4-hydroxybenzyl phosphonate are shown as the phosphorus compound. The amount of each component of each phosphorus compound obtained by changing the structure, in a glycol solution, can be quantified by measuring the solution through P-NMR spectrum method.

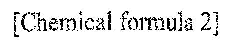

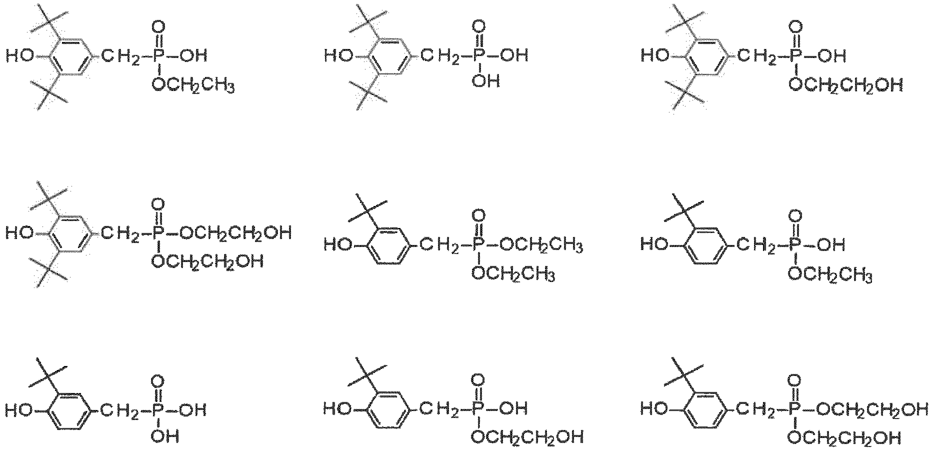

Therefore, as the phosphorus compound in the present invention, modified products of the dialkyl 3,5-di-tert-butyl-4-hydroxybenzyl phosphonate represented by the nine above chemical formulae are also included, in addition to the dialkyl 3,5-di-tert-butyl-4-hydroxybenzyl phosphonate.

### <Maximum absorption wavelength of mixed solution obtained by mixing aluminum-containing glycol solution A1 and phosphorus-containing glycol solution B 1>

The maximum absorption wavelength of a mixed solution obtained by mixing the aluminum-containing glycol solution A1 and the phosphorus-containing glycol solution B1 (hereinafter, simply referred to as "mixed solution") is preferably 559.0 to 560.9 nm, more preferably 559.5 to 560.8 nm, and further preferably 559.7 to 560.6 nm. The maximum absorption wavelength of the mixed solution is a value obtained by adding Mordant Blue 13, which is an acid dye, to the mixed solution and then measuring the absorption spectrum of a sample solution using an ultraviolet-visible spectrophotometer, and the measurement method therefor will be described in detail later.

When the maximum absorption wavelength of the mixed solution is set to be in the above range, the complex formation reaction of the aluminum compound and the phosphorus compound can be kept in a preferable state to achieve both improvement of polymerization activity and suppression of aluminum-based foreign matter. On the other hand, if the maximum absorption wavelength exceeds the above range, the basicity of the mixed solution is high, and the polymerization system of the polyester resin is acidic. Therefore, when the mixed solution is added to the polymerization system, the aluminum compound may be neutralized with the carboxyl group terminal of the polyester resin to generate foreign matter, increasing the amount of aluminum-based foreign matter. On the other hand, if the maximum absorption wavelength is less than the above range, the basicity of the mixed solution is excessively decreased, and the coordination between the aluminum compound and the phosphorus compound becomes strong, so that the polymerization activity may decrease.

### [Molded body]

The polyester resin of the present invention is formed into a hollow molded body, a film, a sheet-shaped product, a fiber, or other molded body by a generally used melt molding method, or into a coating material formed through coating on another substrate by a melt extrusion method.

By stretching a sheet-shaped product consisting of the polyester resin of the present invention at least one axial direction, mechanical strength can be improved.

A stretched film consisting of the polyester resin of the present invention is formed from a sheet-shaped product obtained through injection molding or extrusion molding by any stretching method among methods including uniaxial stretching, sequential biaxial stretching, and simultaneous biaxial stretching, which are usually used for stretching of PET. In addition, the polyester resin can be formed into a cup shape or a tray shape by pressure molding or vacuum molding.

In particular, the polyester resin of the present invention is preferably used as a hollow molded body.

### <Hollow molded body>

The hollow molded body of the present invention is formed from a polyester resin containing an aluminum compound and a phosphorus compound, and is preferably formed from the polyester resin of the present invention described above.

The hollow molded body satisfies the following (7) to (9).
(7) a content of aluminum element in the hollow molded body is 9 to 19 ppm by mass,
(8) a content of phosphorus element in the hollow molded body is 22 to 40 ppm by mass, and
(9) a mole ratio of phosphorus element to aluminum element in the hollow molded body is 1.55 or more and 1.85 or less.

During the process for forming the hollow molded body, the content of aluminum element and the content of phosphorus element, and the content of aluminum element corresponding to aluminum-based foreign matter are unchanged. That is, the hollow molded body and the polyester resin used for forming the hollow molded body have the same contents of aluminum element, phosphorus element, aluminum element corresponding to aluminum-based foreign matter. In the hollow molded body, physical properties such as content of aluminum element, content of phosphorus element, residual mole ratio of phosphorus element to aluminum element, and content of aluminum element corresponding to aluminum-based foreign matter each are desirably in the preferable range of physical properties described above that the polyester resin of the present invention has.

However, only the amount of cyclic trimer (CT) is increased by the process of forming a hollow molded body. Therefore, the amount of cyclic trimer in the hollow molded body of the present invention is preferably 6000 ppm by mass or less, and more preferably 5500 ppm by mass or less. Although low amount of cyclic trimer in the hollow molded body is preferable, the limit is about 3000 ppm by mass due to technical difficulties. When the amount of CT in the hollow molded body is increased, the surface of a mold may be stained, and repeated molding may cause accumulation of staining on the surface of a mold, so that defects such as clouding of obtained hollow molded body may be caused. To avoid these problems, cycles for cleaning a mold needs to be increased, so that productivity is reduced.

This application claims priority to Japanese Patent Application No. 2020-156455 filed on September 17, 2020, the entire contents of which are incorporated herein by reference.

### EXAMPLES

Hereinafter, the present invention will be described by means of Examples, however, the present invention is not limited to the Examples. The evaluation methods used in Examples and Comparative Examples are as follows.

### [Evaluation methods]

### (1) Maximum absorption wavelength of aluminum-containing ethylene glycol solution a1

Ethylene glycol (4 mL) and 1 mmol/L aqueous solution of Mordant Blue 13 (0.3 mL) were added to a sample bottle (size: 6 mL), then an aluminum-containing ethylene glycol solution a1 described later (0.1 mL) was added thereto, and the sample bottle was closed with a lid and shaken for 10 seconds until the solution became uniform. The solution was allowed to stand at room temperature (23°C) for 10 minutes, and the maximum absorption wavelength of the aluminum-containing ethylene glycol solution a1 was determined by measuring the absorption spectrum of the sample solution with an ultraviolet-visible spectrophotometer, under the following conditions. In the measurement, the room temperature was set at 15 to 30°C, and the series of operations was performed indoors in the temperature range.
Apparatus: ultraviolet-visible spectrophotometer UV-1800, manufactured by SHIMADZU CORPORATION
Spectral bandwidth: 1 nm
Sample cell: square cell (material: polymethyl methacrylate (PMMA), optical path length: 10 mm)
Control liquid: ethylene glycol
Scan range: 400 to 700 nm
Scan speed setting: 0.05 sec
Scan pitch: 0.2 nm
Number of scans: 1 time

### (2) Maximum absorption wavelengths of phosphorus-containing ethylene glycol solutions b1 and b1'

Ethylene glycol (4 mL) and 1 mmol/L aqueous solution of Bismarck Brown (0.3 mL) were added to a sample bottle (size: 6 mL), then a phosphorus-containing ethylene glycol solution b1 (0.1 mL) was added thereto, and the sample bottle was closed with a lid and shaken for 10 seconds until the solution became uniform. The solution was allowed to stand at room temperature (23°C) for 10 minutes, and the maximum absorption wavelength of the phosphorus-containing ethylene glycol solution b1 was determined by measuring the absorption spectrum of the sample solution with an ultraviolet-visible spectrophotometer, under the following conditions. In the measurement, the room temperature was set at 15 to 30°C, and the series of operations was performed indoors in the temperature range.
Apparatus: ultraviolet-visible spectrophotometer UV-1800, manufactured by SHIMADZU CORPORATION
Spectral bandwidth: 1 nm
Sample cell: square cell (material: PMMA, optical path length: 10 mm)
Control liquid: ethylene glycol
Scan range: 400 to 700 nm
Scan speed setting: 0.05 sec
Scan pitch: 0.2 nm
Number of scans: 1 time

The maximum absorption wavelength of a phosphorus-containing ethylene glycol solution b1' was determined by the same method as described above, except that the solution to be evaluated was changed from the phosphorus-containing ethylene glycol solution b1 to the phosphorus-containing ethylene glycol solution b1'.

### (3) Maximum absorption wavelength of mixed solution of aluminum-containing ethylene glycol solution a1 and phosphorus-containing ethylene glycol solution b1 or b1'

Ethylene glycol (4 mL) and 1 mmol/L aqueous solution of Mordant Blue 13 (0.3 mL) were added to a sample bottle (size: 6 mL), then a mixed solution (0.1 mL) of the aluminum-containing ethylene glycol solution a1 and the phosphorus-containing ethylene glycol solution b1 or b1' was added thereto, and the sample bottle was closed with a lid and shaken for 10 seconds until the solution became uniform. The solution was allowed to stand at room temperature (23°C) for 10 minutes, and the maximum absorption wavelength was determined by measuring the absorption spectrum of the sample solution with an ultraviolet-visible spectrophotometer under the following conditions. The mixing ratio between the aluminum-containing ethylene glycol solution a1 and the phosphorus-containing ethylene glycol solution b1 or b1' in the mixed solution is equal to the mixing ratio of the aluminum-containing ethylene glycol solution a1 and the phosphorus-containing ethylene glycol solution b1 or b1' in each Example. In the measurement, the room temperature was set at 15 to 30°C, and the series of operations was performed indoors in the temperature range.
Apparatus: ultraviolet-visible spectrophotometer UV-1800, manufactured by SHIMADZU CORPORATION
Spectral bandwidth: 1 nm
Sample cell: square cell (material: PMMA, optical path length: 10 mm)
Control liquid: ethylene glycol
Scan range: 400 to 700 nm
Scan speed setting: 0.05 sec
Scan pitch: 0.2 nm
Number of scans: 1 time

### (4) Intrinsic viscosity (IV) of polyester resin

The polyester resins after melt polymerization and solid phase polymerization were each dissolved into a mixed solvent of p-chlorophenol and 1,1,2,2-tetrachloroethane (= 3/1; mass ratio), and measured at 30°C.

### (5) Content of aluminum element in polyester resin

The polyester resin was weighed in a platinum crucible, carbonized on an electric stove, and incinerated in a muffle furnace under the conditions of 550°C and 8 hours. The incinerated sample was dissolved into 1.2 M hydrochloric acid to prepare a sample solution. The concentration of aluminum element in the polyester resin after solid phase polymerization was determined by high-frequency inductively coupled plasma emission spectrometry.
Apparatus: CIROS-120, manufactured by SPECTRO
Plasma output: 1400 W
Plasma gas: 13.0 L/min
Auxiliary gas: 2.0 L/min
Nebulizer: cross flow nebulizer
Chamber: cyclone chamber
Measurement wavelength: 167.078 nm

### (6) Content of phosphorus element in polyester resin

The polyester resin after solid phase polymerization was subjected to wet decomposition with sulfuric acid, nitric acid, and perchloric acid, and then neutralized with aqueous ammonia. Ammonium molybdate and hydrazine sulfate were added to the prepared solution, and the absorbance at a wavelength of 830 nm was measured with an ultraviolet-visible absorptiometer (UV-1700, manufactured by SHIMADZU CORPORATION). The concentration of the phosphorus element in the polyester resin after solid phase polymerization was determined from a calibration curve prepared in advance.

### (7) Amount of aluminum-based foreign matter

The polyester resin (30 g) after solid phase polymerization was placed in a Erlenmeyer flask (size: 500 mL) containing a stirring bar together with a mixed solution (250 mL) of p-chlorophenol/tetrachloroethane (3/1; mass ratio), and heated and dissolved at 100 to 105°C for 1.5 hours with a hot stirrer. Then, the solution was filtered to separate foreign matters with a membrane filter, which is made of polytetrafluoroethylene and having a diameter of 47 mm and a pore size of 1.0 µm (PTFE membrane filter, product name: T100A047A, manufactured by Advantec). The effective filtration diameter was 37.5 mm. After the filtration, washing was subsequently performed with chloroform (50 mL), and the filter was dried.

The filtration surface of the membrane filter was measured with a scanning fluorescent X-ray analyzer (ZSX100e, Rh line bulb: 4.0 kW, manufactured by RIGAKU) to quantify the amount of aluminum element. A part of 30 mm diameter at a central portion of the membrane filter was quantified. A calibration curve for the fluorescent X-ray analysis method was determined with a polyethylene terephthalate resin containing aluminum element of known content, and the apparent amount of aluminum element was indicated in ppm. The measurement was carried out by measuring the A1-Kα ray intensity at an X-ray output of 50 kV-70 mA with pentaerythritol as a spectroscopic crystal and PC (proportional counter) as a detector under the conditions of PHA (pulse height analyzer) of 100-300. The amount of aluminum element in the polyethylene terephthalate resin for the calibration curve was quantified by high-frequency inductively coupled plasma emission spectrometry.

### (8) Quantification of cyclic trimer

The polyester resin after solid phase polymerization or the hollow molded body formed by the method described later was frozen and pulverized or made into small pieces, and 100 mg of sample was weighed. The sample was dissolved into a mixed liquid (3 mL) of hexafluoroisopropanol/chloroform (2/3, volume ratio), and further diluted by adding chloroform (20 mL). The polymer was precipitated by the addition of methanol (10 mL), and then the solution was filtrated. The filtrate was evaporated to dryness and made up to a constant volume with 10 mL of dimethylformamide. The cyclic trimer in the polyester resin or in the hollow molded body was quantified by high performance liquid chromatography described below.
Apparatus: L-7000 (manufactured by Hitachi, Ltd.)
Column: µ-Bondasphere C18, 5µ, 100 Å, 3.9 mm x 15 cm (manufactured by Waters Corporation.)
Solvent: Eluent A: 2% acetic acid/water (v/v)
   Eluent B: acetonitrile
   Gradient B%: 10 → 100% (0 → 55 minutes)
Flow rate: 0.8 mL/min
Temperature: 30°C
Detector: UV-259 nm

Hereinafter, preparation of aluminum-containing ethylene glycol solution and phosphorus-containing ethylene glycol solution will be described.

### (1) Preparation of aluminum-containing ethylene glycol solution a1

An aqueous solution of basic aluminum acetate (20g/L) and the same volume of ethylene glycol were charged in the preparation tank, and stirred at room temperature (23°C) for several hours. After that, water was distilled off from the system with stirring at 50 to 90°C under reduced pressure (3 kPa) for several hours, and an aluminum-containing ethylene glycol solution a1 containing 20 g/L of the aluminum compound was prepared. The maximum absorption wavelength of the aluminum-containing ethylene glycol solution a1 was 571.6 nm.

### (2) Preparation of phosphorus-containing ethylene glycol solutions b1 and b1'

### <Phosphorus-containing ethylene glycol solution b1>

Irganox 1222 (manufactured by BASF) as a phosphorus compound was charged in a preparation tank together with ethylene glycol, heat-treated at 175°C for 150 minutes with stirring in an atmosphere purged with nitrogen, and a phosphorus-containing ethylene glycol solution b1 containing 50 g/L of the phosphorus compound was prepared. The maximum absorption wavelength of the phosphorus-containing ethylene glycol solution b1 was 461.2 nm.

### <Phosphorus-containing ethylene glycol solution b1'>

A phosphorus-containing ethylene glycol solution b1' was prepared in the same manner as the phosphorus-containing ethylene glycol solution b1, except that the heat treatment conditions were changed to 80°C and 60 minutes. The maximum absorption wavelength of the phosphorus-containing ethylene glycol solution b1' was 470.8 nm.

The phosphorus-containing ethylene glycol solution b1' was used in Comparative Example 3, and the phosphorus-containing ethylene glycol solution b1 was used in all the Examples and in all remaining Comparative Examples except for Comparative Example 3.

### [Example of batch type polymerization method]

### (Example 1)

### <Production of polyester resin>

A prepared polyester oligomer composed of high-purity terephthalic acid and ethylene glycol and having an esterification rate of about 95% and high-purity terephthalic acid were put in a 10 L stainless steel autoclave equipped with a stirrer, and an esterification reaction was carried out at 260°C to obtain an oligomer mixture. The oligomer mixture had an acid terminal group concentration of 750 eq/ton and a hydroxyl terminal group ratio (OH%) of 59 mol%.

A mixed solution obtained as one liquid by mixing the aluminum-containing ethylene glycol solution a1 and the phosphorus-containing ethylene glycol solution b1, which were prepared by the above methods, was added to the obtained oligomer mixture. The mixed solution was previously prepared such that the amounts of aluminum element and phosphorus element were 12 ppm by mass and 32 ppm by mass with respect to the mass of the oligomer mixture, respectively. The amount of the polyester resin to be produced can be calculated from the addition amount of terephthalic acid. In the Examples, the mixed liquid was added such that the amount of aluminum element and phosphorus element became 12 ppm by mass and 32 ppm by mass, respectively, with respect to the polyester resin to be produced.

Thereafter, the temperature of the system was raised to 280°C in 1 hour while the pressure of the system was being gradually reduced to 0.15 kPa, and a polycondensation reaction was carried out under such conditions to produce the polyester resin having an IV of 0.60 dl/g.

The obtained polyester resin was polymerized in the solid phase for 7 hours at 230°C under reduced pressure with a batch-type solid phase polymerization apparatus, to produce the polyester resin having an IV of 0.75 dl/g.

### <Production of hollow molded body>

The polyester resin after solid phase polymerization was dried with a vacuum drier, to regulate the moisture content to 100 ppm by mass or less, and made into a bottomed preform with an injection molding machine (type: 150C-DM, manufactured by MEIKI CO., LTD.) and a mold for preform (mold temperature: 5°C). Plasticization conditions for the M-150C-DM injection molding machine were set to a feed screw rotation number of 70%, a screw rotation number of 120 rpm, a back pressure of 0.5 MPa, cylinder temperatures of 45°C and 250°C in the order from directly beneath the hopper, and a temperature of the subsequent cylinder part including nozzles set at 290°C. The injection pressure and the retention pressure were regulated so that the weight of the molded product became 28.4±0.2 g.

Then, the mouth plug part of the preform was crystallized by heating with a mouth plug part crystallizing device (NC-01, manufactured by Frontier, Inc.). Next, the hollow molded body was formed by biaxial stretching blow molding of the preform at a ratio of 2.5 times in the longitudinal direction and at a ratio of 3.8 times in the circumferential direction at 750 bph in a molding cycle of 30 seconds, with blowing of the air at a pressure of 36 bar in a die set at 160°C, by a Lab blow molding machine (SBO Lab No 1045 type 1, manufactured by Sidel).

### (Examples 2 to 5 and Comparative Examples 1 and 2)

The polyester resins were produced in the same manner as Example 1, except that the aluminum-containing ethylene glycol solution a1 and the phosphorus-containing ethylene glycol solution b1 were added such that the addition amount of the catalyst elements with respect to the polyester resin to be produced became the amount listed in Table 1. The hollow molded bodies were produced in the same manner as Example 1.

### (Comparative Example 3)

The polyester resin was produced in the same manner as Example 1, except that the solution b1' was used instead of the solution b1, as a phosphorus-containing ethylene glycol solution. The hollow molded bodies were produced in the same manner as Example 1.

Table 1 shows the physical properties of the polyester resins produced in Examples 1 to 5 and Comparative Examples 1 to 3. In Table 1, and in Table 2 described later, Al indicates the addition amount and the residual amount of aluminum element, P indicates the addition amount and the residual amount of phosphorus element, and P/Al indicates the addition mole ratio and the residual mole ratio of phosphorus element to aluminum element.

**[Table 1]**

| Item | | | Example 1 | Example 2 | Example 3 | Example 4 | Example 5 | Comparative Example 1 | Comparative Example 2 | Comparative Example 3 |
|---|---|---|---|---|---|---|---|---|---|---|
| Melt polymerization | Catalyst element addition amount | Al (ppm by mass) | 12 | 15 | 14 | 17 | 15 | 21 | 10 | 12 |
| | | P (ppm by mass) | 32 | 39 | 37 | 41 | 41 | 58 | 20 | 32 |
| | | P/Al (mole ratio) | 2.32 | 2.27 | 2.30 | 2.10 | 2.38 | 2.41 | 1.74 | 2.32 |
| | Maximum absorption wavelength (nm) | Ethylene glycol solution of aluminum compound | 571.6 | 571.6 | 571.6 | 571.6 | 571.6 | 571.6 | 571.6 | 571.6 |
| | | Ethylene glycol solution of phosphorus compound | 461.2 | 461.2 | 461.2 | 461.2 | 461.2 | 461.2 | 461.2 | 470.8 |
| | | Mixed solution | 559.7 | 559.8 | 559.7 | 560.0 | 559.6 | 559.2 | 560.4 | 560.0 |
| | Polymerization temperature(°C) | | 280 | 280 | 280 | 280 | 280 | 280 | 280 | 280 |
| | Polycondensation time (min) | | 61 | 56 | 56 | 55 | 59 | 68 | 46 | 50 |
| | IV (dl/g) | | 0.60 | 0.59 | 0.61 | 0.60 | 0.60 | 0.59 | 0.60 | 0.60 |
| Solid phase polymerization | Catalyst element residual amount | Al (ppm by mass) | 12 | 15 | 14 | 17 | 15 | 21 | 10 | 12 |
| | | P (ppm by mass) | 24 | 29 | 27 | 31 | 30 | 44 | 16 | 21 |
| | | P/Al (mole ratio) | 1.74 | 1.68 | 1.68 | 1.59 | 1.74 | 1.83 | 1.39 | 1.52 |
| | Amount of aluminum-based foreign matter (ppm) | | 890 | 1100 | 1000 | 1600 | 900 | 710 | 2500 | 1700 |
| | IV (dl/g) | | 0.75 | 0.74 | 0.74 | 0.74 | 0.74 | 0.74 | 0.73 | 0.73 |
| | CT (ppm by mass) | | 4100 | 4400 | 4400 | 4100 | 4100 | 3950 | 5300 | 5600 |
| Hollow molded body | CT (ppm by mass) | | 4650 | 5000 | 5050 | 4600 | 4600 | 4500 | 6100 | 6300 |

Although the addition amounts of aluminum element and phosphorus element are small in the polyester resin of Examples 1 to 5, the polyester resin have a short polymerization time, and have hight quality due to decreased amounts of the aluminum-based foreign matter and CT in the polyester resin after solid phase polymerization. The small addition amount of the catalyst reduces catalyst cost. Since the hollow molded body is manufactured using polyester resin with small CT amount, the CT amount of the hollow molded body is also small.

In Comparative Example 1, large addition amount of the phosphorus compound leads to high catalyst cost, but Comparative Example 1 is preferable in that high addition mole ratio of phosphorus element to aluminum element can suppress the aluminum-based foreign matter. However, Comparative Example 1 is not preferable in reduced polymerization activity and high catalyst cost.

In Comparative Examples 2, excessively low residual mole ratio of phosphorus element to aluminum element leads to lower catalyst cost, however, increased amounts of the aluminum-based foreign matter in the polyester resin after solid phase polymerization and CT leads to the polyester resin of inferior quality. Since the hollow molded body is manufactured using polyester resin with large CT amount, the CT amount of the hollow molded body is also large.

In Comparative Example 3, the addition mole ratio of phosphorus element to aluminum element is set to be in the range of the present invention, resulting in short polymerization time and low catalyst cost. However, the phosphorus-containing ethylene glycol solution b1' has significantly larger maximum absorption wavelength than those of Examples 1 to 5, leading to low residual mole ratio of phosphorus element to aluminum element. Accordingly, the amounts of aluminum-based foreign matter and CT in the polyester resin after solid phase polymerization are increased, and thus the polyester resin has inferior quality. Since the hollow molded body is manufactured using polyester resin with large CT amount, the CT amount of the hollow molded body is also large.

### [Example of continuous polymerization method]

### (Example 6)

To a continuous polyester resin production apparatus including three continuous esterification reactors, three continuous polycondensation reactors, and an in-line mixer equipped with a high-speed stirrer on a transfer line from the third esterification reactor to the first polycondensation reactor, a slurry prepared by mixing 0.75 parts by mass of ethylene glycol to 1 part by mass of high-purity terephthalic acid was continuously supplied to prepare an oligomer. The reaction was carried out at a temperature of 255°C and a pressure of 203 kPa in the first esterification reactor, at a temperature of 261°C and a pressure of 102 kPa in the second esterification reactor, and at a temperature of 261 to 263°C and a pressure of 126 kPa in the third esterification reactor. The oligomer at the outlet of the third esterification reactor had an acid terminal group concentration of 550 eq/ton and a hydroxyl group terminal ratio (OH%) of 60 mol%.

A mixed solution obtained as one liquid by mixing the aluminum-containing ethylene glycol solution a1 and the phosphorus-containing ethylene glycol solution b1, which were prepared by the above methods, was added to the obtained oligomer using the in-line mixer on the transfer line from the third esterification tank to the first polycondensation reactor. Specifically, the aluminum-containing ethylene glycol solution a1 and the phosphorus-containing ethylene glycol solution b1, which were prepared by the above methods, were mixed as a catalyst to obtain a solution as one liquid such that the amounts of aluminum element and phosphorus element were 12 ppm by mass and 32 ppm by mass with respect to the obtained oligomer, respectively, and this solution was added. The amount of the polyester resin to be produced can be calculated from the amount of terephthalic acid added. In the Examples, the mixed solution was added such that the amounts of aluminum element and phosphorus element became 12 ppm by mass and 32 ppm by mass, respectively, with respect to the polyester resin to be produced.

The oligomer containing the mixed solution was continuously transferred to a continuous polycondensation apparatus including three reactors, and polycondensation was carried out at a reaction temperature of 268°C and a pressure of 5.3 kPa at the first polycondensation reactor, a reaction temperature of 270°C and a pressure of 0.930 kPa at the second polycondensation reactor, and a reaction temperature of 274°C and a pressure of 0.162 kPa at the third polycondensation reactor, to produce the polyester resin having an IV of 0.59 dl/g. The polyester resin was extruded into strands, cooled in water, and then cut to be pelletized.

The polyester resin chip was then transferred to a continuous solid phase polymerization apparatus. The polyester resin chip was crystallized at about 155°C under nitrogen atmosphere and preheated at about 200°C under nitrogen atmosphere, and then the polyester resin chip was transferred to a continuous solid phase polymerization reactor and subjected to solid phase polymerization at about 207°C under nitrogen atmosphere. Then, fine particles and film-form materials were removed from the polyester resin after solid phase polymerization in a vibration sealing step and an air stream classification step, and the polyester resin having an IV of 0.75 dl/g was produced. The hollow molded body was produced in the same manner as Example 1.

### (Examples 7 and 8 and Comparative Examples 4 and 5)

Polyester resins were produced in the same manner as Example 6, except that the aluminum-containing ethylene glycol solution a1 and the phosphorus-containing ethylene glycol solution b1 were added such that the addition amount of the catalyst element with respect to the oligomer became the amount shown in Table 2. The hollow molded body was produced in the same manner as Example 1.

Table 2 shows the physical properties and the like of the polyester resins produced in Examples 6 to 8 and Comparative Examples 4 and 5.

**[Table 2]**

| Item | | | Example 6 | Example 7 | Example 8 | Comparative Example 4 | Comparative Example 5 |
|---|---|---|---|---|---|---|---|
| Melt polymerization | Catalyst element addition amount | A1 (ppm by mass) | 12 | 15 | 18 | 21 | 12 |
| | | P (ppm by mass) | 32 | 37 | 42 | 58 | 24 |
| | | P/Al (mole ratio) | 2.32 | 2.15 | 2.03 | 2.41 | 1.74 |
| | Maximum absorption wavelength (nm) | Ethylene glycol solution of aluminum compound | 571.6 | 571.6 | 571.6 | 571.6 | 571.6 |
| | | Ethylene glycol solution of phosphorus compound | 461.2 | 461.2 | 461.2 | 461.2 | 461.2 |
| | | Mixed solution of catalyst | 559.7 | 560.0 | 560.1 | 559.2 | 560.2 |
| | IV (dl/g) | | 0.59 | 0.59 | 0.59 | 0.59 | 0.59 |
| | Production amount ratio | | 1.02 | 1.01 | 1.04 | 1.00 | 1.05 |
| Solid phase polymerization | Catalyst element residual amount | A1 (ppm by mass) | 12 | 15 | 18 | 21 | 12 |
| | | P (ppm by mass) | 24 | 27 | 32 | 45 | 19 |
| | | P/Al (mole ratio) | 1.74 | 1.57 | 1.55 | 1.87 | 1.38 |
| | Amount of aluminum-based foreign matter (ppm) | | 800 | 950 | 980 | 450 | 1800 |
| | IV (dl/g) | | 0.75 | 0.74 | 0.75 | 0.73 | 0.74 |
| | CT (ppm by mass) | | 3900 | 3700 | 3800 | 3600 | 5300 |
| Hollow molded body | CT (ppm by mass) | | 4400 | 4300 | 4350 | 4200 | 6100 |

The production amount ratio shown in Table 2 represents the hourly production amounts in Examples 6 to 8 and Comparative Examples 5 expressed as a ratio, based on the hourly production amount in Comparative Example 4 (with the hourly production amount in Comparative Example 4 regarded as 1.00). The production amount ratio of higher than 1 indicates high polymerization activity of the catalyst, and the production amount ratio of equal to or lower than 1 indicates low polymerization activity of the catalyst.

The polyester resins of Examples 6 to 8 each have higher production amount ratios than Comparative Example 4, the addition amounts of aluminum element and phosphorus element is small, the catalyst cost can be decreased, and the polymerization activity is increased. Also, the amounts of the aluminum-based foreign matter and CT in the polyester resin after solid phase polymerization are small, and the polyester resin of high quality is produced. Since the hollow molded body is manufactured using polyester resin with small CT amount, the CT amount of the hollow molded body is also small.

In Comparative Example 5, excessively low residual mole ratio of phosphorus element to aluminum element leads to increased amounts of the aluminum-based foreign matter and CT in the polyester resin after solid phase polymerization, resulting in the polyester resin of inferior quality. Since the hollow molded body is manufactured using polyester resin with large CT amount, the CT amount of the hollow molded body is also large.

FIG. 1 represents the relationship between the residual mole ratio of phosphorus element to aluminum element, the amount of aluminum-based foreign matter, and the polymerization time based on the results of Examples 1 to 5 and Comparative Examples 1 and 2 shown in Table 1. FIG. 2 represents the relationship between the maximum absorption wavelength of the mixed solution of the aluminum-containing ethylene glycol solution a1 and the phosphorus-containing ethylene glycol solution b1, the amount of aluminum-based foreign matter, and the polymerization time based on the results of Examples 1 to 5 and Comparative Examples 1 and 2 shown in Table 1.

The FIGs clarify the criticality of the range of the present invention and also reveal the trade-off relationship between the amount of aluminum-based foreign matter and the polymerization time.

### INDUSTRIAL APPLICABILITY

The polyester resin and the hollow molded body of the present invention, which are produced with the polymerization catalyst containing aluminum compound and phosphorus compound, can maintain color tone and heat stability, can suppress the formation of the aluminum-based foreign matter while the polymerization activity is being maintained, and also can decrease the catalyst costs. Accordingly, the polyester resin environmentally clean and of high quality can be provided, with a significant contribution to the industry.

## Claims

1. A polyester resin, comprising an aluminum compound and a phosphorus compound, and satisfying the following (1) to (3):
(1) a content of aluminum element in the polyester resin is 9 to 19 ppm by mass,
(2) a content of phosphorus element in the polyester resin is 22 to 40 ppm by mass, and
(3) a mole ratio of phosphorus element to aluminum element in the polyester resin is 1.55 or more and 1.85 or less.

2. The polyester resin according to claim 1, wherein a content of aluminum element corresponding to aluminum-based foreign matter in the polyester resin is 1650 ppm by mass or less.

3. The polyester resin according to claim 1 or 2, wherein the polyester resin has an intrinsic viscosity (IV) of 0.56 dl/g or more.

4. The polyester resin according to any one of claims 1 to 3, wherein the phosphorus compound has a phosphorus element and a phenolic structure in the same molecule thereof.

5. The polyester resin according to any one of claims 1 to 4, wherein an amount of a cyclic trimer is 5000 ppm or less.

6. A method for producing the polyester resin according to any one of claims 1 to 5, the method comprising:
a first step of synthesizing a polyester which is a polycondensate, or an oligomer thereof, as an intermediate;
a second step of performing melt polymerization of the intermediate; and
a third step of performing solid phase polymerization of a polyester resulting from the melt polymerization, wherein
after the first step and before the second step, a solution A1 obtained by dissolving an aluminum compound and a solution B1 obtained by dissolving a phosphorus compound are added to the intermediate, and
addition amounts of the solution A1 and the solution B1 satisfy the following (4) to (6),
(4) an addition amount of aluminum element with respect to the polyester resin to be produced is 9 to 19 ppm by mass,
(5) an addition amount of phosphorus element with respect to the polyester resin to be produced is 25 to 50 ppm by mass, and
(6) a mole ratio of the addition amount of phosphorus element in the (5) to the addition amount of aluminum element in the (4) is 2.00 or more and 2.40 or less.

7. The method for producing the polyester resin according to claim 6, wherein the melt polymerization is performed until the intrinsic viscosity (IV) reaches 0.56 to 0.65 dl/g, and the solid phase polymerization is subsequently performed until the intrinsic viscosity (IV) reaches 0.70 to 0.85 dl/g.

8. The method for producing the polyester resin according to claim 6 or 7, wherein the solution A1 is a glycol solution and has a maximum absorption wavelength of 562.0 to 572.0 nm.

9. The method for producing the polyester resin according to claim 8, wherein the solution B1 is a glycol solution and has a maximum absorption wavelength of 460.0 to 463.0 nm.

10. The method for producing the polyester resin according to claim 9, wherein, for the glycol solution B1, heat treatment of the phosphorus compound is performed in a glycol solution at 170 to 196°C for 125 to 240 minutes.

11. The method for producing the polyester resin according to any one of claims 6 to 10, wherein
the solution A1 and the solution B1 are glycol solutions, and
a mixed solution of the glycol solution A1 and the glycol solution B1 has a maximum absorption wavelength of 559.5 to 560.8 nm.

12. A hollow molded body formed from a polyester resin, comprising an aluminum compound and a phosphorus compound, and satisfying the following (7) to (9),
(7) a content of aluminum element in the hollow molded body is 9 to 19 ppm by mass,
(8) a content of phosphorus element in the hollow molded body is 22 to 40 ppm by mass, and
(9) a mole ratio of phosphorus element to aluminum element in the hollow molded body is 1.55 or more and 1.85 or less.

13. The hollow molded body according to claim 12, wherein a content of aluminum element corresponding to aluminum-based foreign matter in the hollow molded body is 1650 ppm by mass or less.

14. The hollow molded body according to claim 12 or 13, wherein the phosphorus compound has a phosphorus element and a phenolic structure in the same molecule thereof.

15. The hollow molded body according to any one of claims 12 to 14, wherein an amount of a cyclic trimer is 6000 ppm or less.

16. A method for producing the hollow molded body according to any one of claims 12 to 15, the method comprising molding the polyester resin according to any one of claims 1 to 5 to produce the hollow molded body.
